# EUROPEAN PATENT APPLICATION

(11) **EP 4 116 004 A1**
(43) Date of publication of application: **11.01.2023**
(21) Application number: 21763628.1
(22) Date of filing: 13.01.2021
(51) Int. Cl.: B21D 26/033, G06K 1/12, G05B 19/418, G06Q 50/04

(54) **INFORMATION PROVIDING DEVICE AND DETERMINATION SYSTEM**

(30) Priority: 02.03.2020 JP 2020034940
(71) Applicant: SUMITOMO HEAVY INDUSTRIES, LTD., Tokyo 141-6025 (JP)
(72) Inventor: ISHIZUKA, Masayuki, Niihama-shi, Ehime 792-8588 (JP); UENO, Norieda, Niihama-shi, Ehime 792-8588 (JP)
(74) Representative: Louis Pöhlau Lohrentz
(86) International application number: PCT/JP2021/000874
(87) International publication number: WO 2021/176851

(57) **Abstract**

The information providing device is an information providing device that provides information to a formed product formed by a forming device having a die. The information is provided to the formed product after being formed by the forming device, and the information is information from which at least forming conditions of the formed product are acquirable.

## Description

### Technical Field

One aspect of the present invention relates to an information providing device and a determination system.

### Background Art

In the related art, forming devices for forming formed products with a die have been known. For example, the following Patent Document 1 discloses a forming device including a forming die having a lower die and an upper die paired with each other, a gas supply portion that supplies gas into a metal pipe material held between the forming dies, and a heating unit that heats the metal pipe material by energization and heating.

### Citation List

### Patent Literature

[PTL 1] Japanese Unexamined Patent Publication No. 2009-220141

### Summary of Invention

### Technical Problem

Here, information may be provided to a die-formed product by marking in order to secure traceability. For example, as a method of giving the information to the formed product, there are a method of performing marking in advance before the forming and a method of performing marking simultaneously with the forming with the forming device. However, in the marking methods, there is a possibility that a mark disappears or becomes unclear along with the forming, and there is a case where the traceability is not secured. Additionally, as the information, only simple information such as a lot of the formed product was included. However, for example, in a case where the forming conditions become complicated, it is necessary to identify the forming conditions for the formed product, for example, in a case where there is a problem with the formed product in a subsequent inspection process. However, in a case where the information marked on the formed product includes only information such as the lot, there are problems in that it is not possible to specify under what conditions the formed product has been formed and sufficient traceability cannot be secured.

One aspect of the present invention has been made to solve such a problem, and an object of the present invention is to provide an information providing device and a determination system capable of improving the traceability of a formed product.

### Solution to Problem

The information providing device according to an aspect of the present invention is an information providing device that provides information to a formed product formed by a forming device having a die. The information is provided to the formed product after being formed by the forming device, and the information is information from which at least forming conditions of the formed product are acquirable.

The information providing device provides the information to the formed product after being formed by the forming device. Therefore, it is possible to avoid a situation in which the information provided to the formed product disappears along with the forming. Additionally, the information is information from which at least the forming conditions of the formed product are acquirable. Therefore, for example, in a case where there is a problem with the formed product in a subsequent inspection process, it is possible to specify under what forming conditions the formed product is formed. From the above, the traceability of the formed product can be improved.

The information may be represented in such a manner that the forming conditions are directly readable. In this case, the forming conditions can be quickly read from the information reflected in the formed product without referring to the forming conditions in the database.

The information may be represented in such a manner that the database associated with the forming conditions is capable of being referred to. In this case, even if the information reflected in the formed product is simple, many forming conditions can be acquired by referring to the database.

The information providing device according to an aspect of the present invention is an information providing device that provides information to a formed product formed by a forming device having a die, and the information providing device provides the information to each formed product whenever one formed product is formed by the forming device.

The information providing device provides the information to each formed product whenever one formed product is formed by the forming device. Therefore, the information providing device can directly provide the information to an individual formed product. Therefore, for example, in a case where there is a problem with the formed product in a subsequent inspection process, the information can be directly acquired from the formed product. From the above, the traceability of the formed product can be improved.

The information providing device may be provided between the forming device and an accumulation unit that accumulates a plurality of the formed products . When a large number of formed products are mixedly present in the accumulation unit, it is difficult to individually provide the information on each formed product. Therefore, the information providing device can individually provide the information to the formed product in a stage before being accumulated in the accumulation unit.

The determination system according to one aspect of the present invention is a determination system that determines a formed product formed by a forming device having a die. Forming conditions of the formed product are determined on the basis of information provided to the formed product, and the information is information from which at least the forming conditions of the formed product are acquirable.

The information is information from which at least the forming conditions of the formed product are acquirable. Therefore, for example, in a case where there is a problem with the formed product in a subsequent inspection process, it is possible to specify under what forming conditions the formed product is formed. Therefore, the determination system can specify the forming conditions of a formed product having a problem by determining the forming conditions of the formed product on the basis of the information provided to the formed product. From the above, the traceability of the formed product can be improved.

### Advantageous Effects of Invention

According to one aspect of the present invention, it is possible to provide the information providing device and the determination system that can improve the traceability of the formed product.

### Brief Description of Drawings

Fig. 1 is a block diagram of a formed product manufacturing system including an information providing device according to the present embodiment.
Fig. 2 is a schematic diagram of a forming device according to the embodiment of the present invention.
Fig. 3 is a cross-sectional view showing an aspect when a nozzle has sealed a metal pipe material.
Figs. 4A and 4B are cross-sectional views of a forming die.
Figs. 5A and 5B are diagrams showing the metal pipe and information provided to the metal pipe.
Figs. 6A to 6C are schematic diagrams showing an example of the information providing device and an accumulation device.
Fig. 7 is a block diagram of a formed product manufacturing system including an information providing device and a determination system according to a modification example.

### Description of Embodiments

Hereinafter, preferred embodiments of the present invention will be described with reference to the drawings. In addition, in the respective drawings, the same portions or corresponding portions are designated by the same reference numerals, and duplicate descriptions will be omitted.

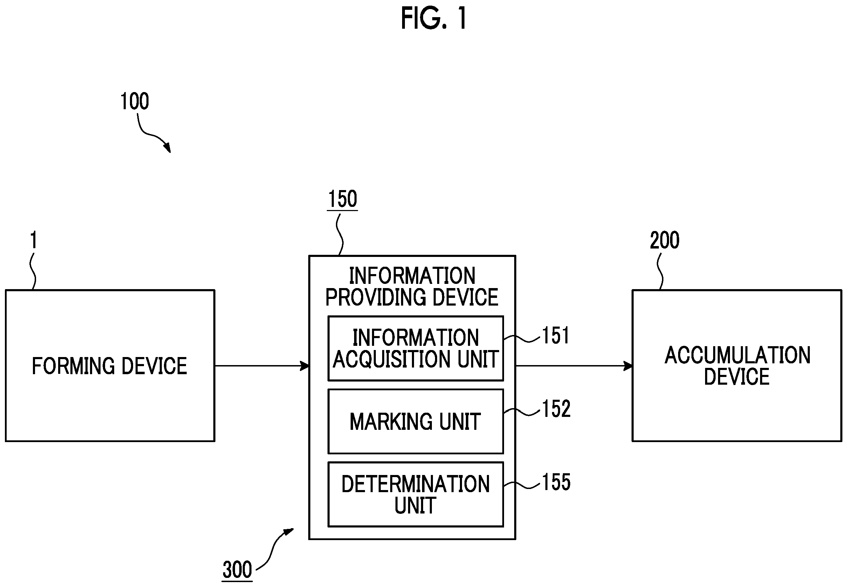

Fig. 1 is a block diagram of a formed product manufacturing system 100 including an information providing device 150 according to the present embodiment. As shown in Fig. 1, the formed product manufacturing system 100 includes a forming device 1, an information providing device 150, and an accumulation device 200 (accumulation unit).

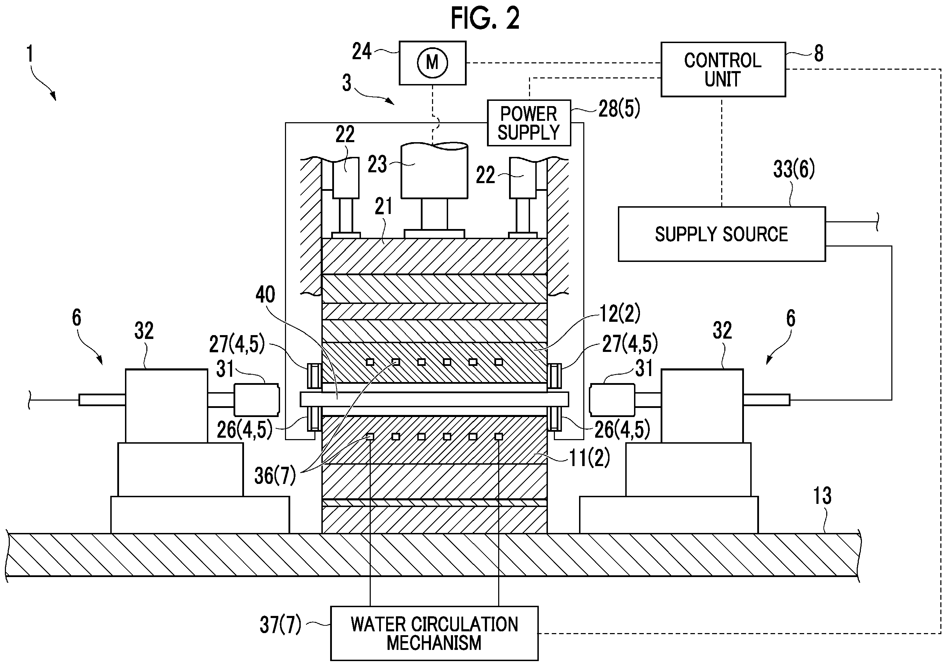

Fig. 2 is a schematic diagram of the forming device 1 according to the present embodiment. As shown in Fig. 2, the forming device 1 is a device that forms a metal pipe (formed product) having a hollow shape by blow forming. In the present embodiment, the forming device 1 is installed on a horizontal plane. The forming device 1 includes a forming die 2, a drive mechanism 3, a holding unit 4, a heating unit 5, a fluid supply unit 6, a cooling unit 7, and a control unit 8. In addition, in the present specification, the metal pipe refers to a hollow article after the forming in the forming device 1 is completed, and a metal pipe material 40 (metal material) refers to a hollow article before the forming in the forming device 1 is completed. The metal pipe material 40 is a steel type pipe material that can be hardened. Additionally, in the horizontal direction, a direction in which the metal pipe material 40 extends during forming may be referred to as a "longitudinal direction", and a direction perpendicular to the longitudinal direction may be referred to as a "width direction".

The forming die 2 is a die that forms the metal pipe material 40 into a metal pipe, and includes a lower die 11 (first die) and an upper die 12 (second die) that face each other in the vertical direction. The lower die 11 and the upper die 12 are made of steel blocks. The lower die 11 is fixed to a base stage 13 via a die holder or the like. The upper die 12 is fixed to a slide of the drive mechanism 3 via a die holder or the like.

The drive mechanism 3 is a mechanism that moves at least one of the lower die 11 and the upper die 12. In Fig. 2, the drive mechanism 3 has a configuration in which only the upper die 12 is moved. The drive mechanism 3 includes a slide 21 that moves the upper die 12 such that the lower die 11 and the upper die 12 are joined together, and a pull-back cylinder 22 serving as an actuator that generates a force for pulling the slide 21 upward, a main cylinder 23 serving as a drive source that downward-pressurizes the slide 21, and a drive source 24 that applies a driving force to the main cylinder 23.

The holding unit 4 is a mechanism that holds the metal pipe material 40 disposed between the lower die 11 and the upper die 12. The holding unit 4 includes a lower electrode 26 and an upper electrode 27 that hold the metal pipe material 40 on one end side in the longitudinal direction of the forming die 2, and a lower electrode 26 and an upper electrode 27 that holds the metal pipe material 40 on the other end side in the longitudinal direction of the forming die 2. The lower electrodes 26 and the upper electrodes 27 on both sides in the longitudinal direction hold the metal pipe material 40 by sandwiching the vicinity of an end portion of the metal pipe material 40 from the vertical direction. In addition, groove portions having a shape corresponding to an outer peripheral surface of the metal pipe material 40 are formed on an upper surface of the lower electrode 26 and a lower surface of the upper electrode 27. The lower electrode 26 and the upper electrode 27 are provided with drive mechanisms (not shown) and are movable independently in the vertical direction.

The heating unit 5 heats the metal pipe material 40. The heating unit 5 is a mechanism that heats the metal pipe material 40 by energizing the metal pipe material 40. The heating unit 5 heats the metal pipe material 40 in a state where the metal pipe material 40 is spaced apart from the lower die 11 and the upper die 12 between the lower die 11 and the upper die 12. The heating unit 5 includes the lower electrodes 26 and the upper electrodes 27 on both sides in the longitudinal direction described above, and a power supply 28 that allows an electric current to flow to the metal pipe material through the electrodes 26 and 27. In addition, the heating unit may be disposed in the previous process of the forming device 1 and performs heating externally.

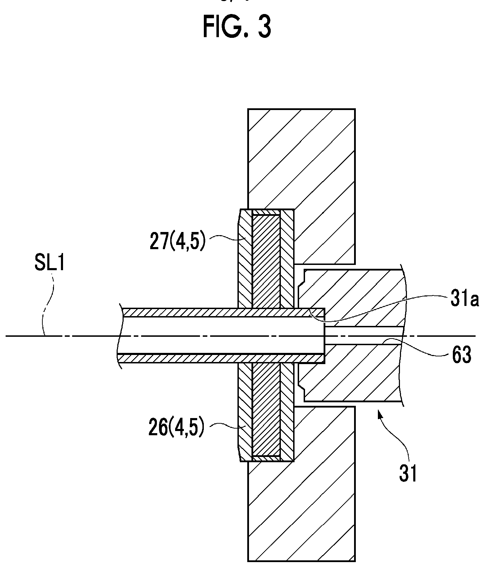

The fluid supply unit 6 is a mechanism that supplies a high-pressure fluid into the metal pipe material 40 held between the lower die 11 and the upper die 12. The fluid supply unit 6 supplies the high-pressure fluid to the metal pipe material 40 that has been brought into a high-temperature state by being heated by the heating unit 5, and expands the metal pipe material 40. The fluid supply unit 6 is provided on both end sides of the forming die 2 in the longitudinal direction. The fluid supply unit 6 includes a nozzle 31 that supplies fluid from an opening of an end portion of the metal pipe material 40 to the inside of the metal pipe material 40, and a drive mechanism 32 that moves the nozzle 31 forward and backward with respect to the opening of the metal pipe material 40, and a supply source 33 that supplies the high-pressure fluid into the metal pipe material 40 via the nozzle 31. In the drive mechanism 32, the nozzle 31 is brought into close contact with the end portion of the metal pipe material 40 in a state where the sealing performance is secured during fluid supply and exhaust (refer to Fig. 3), and at other times, the nozzle 31 is spaced apart from the end portion of the metal pipe material 40. In addition, the fluid supply unit 6 may supply a gas such as high-pressure air or an inert gas as the fluid. Additionally, the fluid supply unit 6 may be the same device including the heating unit 5 together with the holding unit 4 having a mechanism that moves the metal pipe material 40 in the vertical direction.

Fig. 3 is a cross-sectional view showing an aspect when the nozzle 31 seals the metal pipe material 40. As shown in Fig. 3, the nozzle 31 is a cylindrical member into which the end portion of the metal pipe material 40 is insertable. The nozzle 31 is supported by the drive mechanism 32 such that a center line of the nozzle 31 coincides with a reference line SL1. The inner diameter of a feed port 31a of an end portion of the nozzle 31 on the metal pipe material 40 side substantially coincides with the outer diameter of the metal pipe material 40 after expansion forming. In this state, the nozzle 31 supplies the high-pressure fluid from an internal flow path 63 to the metal pipe material 40.

Returning to Fig. 2, the cooling unit 7 is a mechanism that cools the forming die 2. By cooling the forming die 2, the cooling unit 7 can rapidly cool the metal pipe material 40 when the expanded metal pipe material 40 has come into contact with a forming surface of the forming die 2. The cooling unit 7 includes a flow path 36 formed inside the lower die 11 and the upper die 12, and a water circulation mechanism 37 that supplies and circulates cooling water to the flow path 36.

The control unit 8 is a device that controls the entire forming device 1. The control unit 8 controls the drive mechanism 3, the holding unit 4, the heating unit 5, the fluid supply unit 6, and the cooling unit 7. The control unit 8 repeatedly performs an operation of forming the metal pipe material 40 with the forming die 2.

Specifically, the control unit 8 controls, for example, the transport timing from a transport device such as a robot arm to dispose the metal pipe material 40 between the lower die 11 and the upper die 12 in an open state. Alternatively, the control unit 8 may wait for a worker to manually dispose the metal pipe material 40 between the lower die 11 and the upper die 12. Additionally, the control unit 8 supports the metal pipe material 40 with the lower electrodes 26 on both sides in the longitudinal direction, and then controls the actuator of the holding unit 4 so as to lower the upper electrode 27 to sandwich the metal pipe material 40. Additionally, the control unit 8 controls the heating unit 5 to energize and heat the metal pipe material 40. Accordingly, an axial electric current flows through the metal pipe material 40, and the electric resistance of the metal pipe material 40 itself causes the metal pipe material 40 itself to generate heat due to Joule heat.

The control unit 8 controls the drive mechanism 3 to lower the upper die 12 and bring the upper die 12 closer to the lower die 11 to close the forming die 2. On the other hand, the control unit 8 controls the fluid supply unit 6 to seal the openings of both ends of the metal pipe material 40 with the nozzle 31 and supply the fluid. Accordingly, the metal pipe material 40 softened by heating expands and comes into contact with the forming surface of the forming die 2. Then, the metal pipe material 40 is formed so as to follow the shape of the forming surface of the forming die 2. When the metal pipe material 40 comes into contact with the forming surface, hardening of the metal pipe material 40 is performed by being quenched with the forming die 2 cooled by the cooling unit 7.

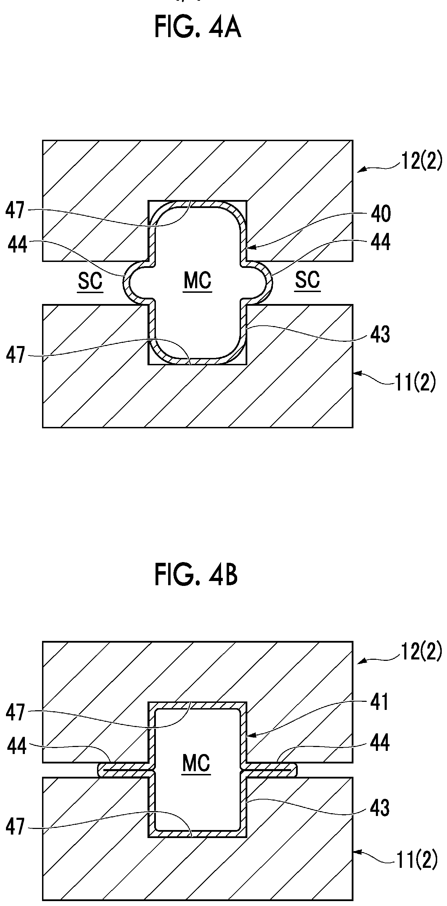

A forming procedure of the forming device 1 will be described with reference to Figs. 4A and 4B. As shown in Fig. 4A, the control unit 8 performs blow forming (primary blowing) by closing the forming die 2 and supplying the fluid to the metal pipe material 40 by the fluid supply unit 6. In the primary blowing, the control unit 8 forms a pipe portion 43 at a main cavity portion MC and causes a portion corresponding to a flange portion 44 to enter a sub-cavity portion SC. Then, as shown in Fig. 4B, the control unit 8 forms the flange portion 44 by further closing the forming die 2 and further crushing the portion that has entered the sub-cavity portion SC. Additionally, the control unit 8 performs blow forming at a higher pressure (secondary blowing). Next, the control unit 8 performs die opening by raising the upper die 12 to space the upper die 21 apart from the metal pipe material 40. Accordingly, the metal pipe 41 is formed.

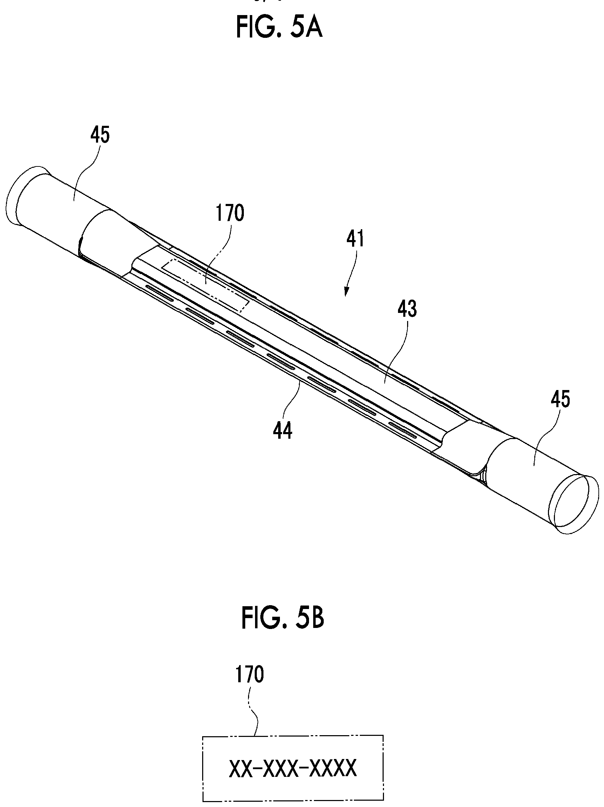

From the above, the metal pipe 41 as shown in Figs. 5A and 5B is formed. The metal pipe 41 has the pipe portion 43 that extends in the longitudinal direction, and the flange portion 44 that overhangs from the pipe portion 43. Additionally, the metal pipe 41 has surplus parts 45 held by the holding unit 4 or sealed by the nozzle 31 at both ends in the longitudinal direction.

Returning to Fig. 1, the information providing device 150 is a device that provides information to the metal pipe 41 (refer to Figs. 5A and 5B) formed by the forming device 1. The information providing device 150 provides information by marking the surface of any spot of the metal pipe 41. The information providing device 150 provides information to the metal pipe 41 after being formed by the forming device 1. In addition, the metal pipe 41 after being formed means the metal pipe 41 after the forming is completed and the metal pipe 41 exits from the forming device 1.

The information providing device 150 provides the information to each metal pipe 41 whenever one metal pipe 41 is formed by the forming device 1. The information providing device 150 is provided between the forming device 1 and the accumulation device 200 for accumulating a plurality of formed products. Therefore, the metal pipe 41 after being marked by the information providing device 150 is accumulated by the accumulation device 200. The information providing device 150 includes an information acquisition unit 151, a marking unit 152, and a determination unit 155.

The information acquisition unit 151 acquires information to be provided to the metal pipe 41. Here, the information provided by the information providing device 150 is information from which at least the forming conditions of the metal pipe 41 are acquirable. Therefore, the information acquisition unit 151 acquires the forming conditions of the metal pipe 41 immediately after the forming from the control unit 8 of the forming device 1. The forming conditions include information such as the heating temperature of the metal pipe material 40, the die opening width for overhanging the flange portion 44 (refer to Fig. 5) of the metal pipe 41, the pressure and timing of the primary blowing, the die clamping force and timing for forming the pipe portion 43 (refer to Figs. 5A and 5B), and the pressure and timing of the secondary blowing. The control unit 8 of the forming device 1 identifies the forming conditions as preset set values, or identifies the preset values as measured values when being actually formed. Therefore, the information acquisition unit 151 acquires the forming conditions from the control unit 8. In addition, in addition to the forming conditions, the information acquisition unit 151 also acquires information such as the material and the environment (temperature, humidity, or the like) during the forming, and the information providing device 150 may provide such information as well.

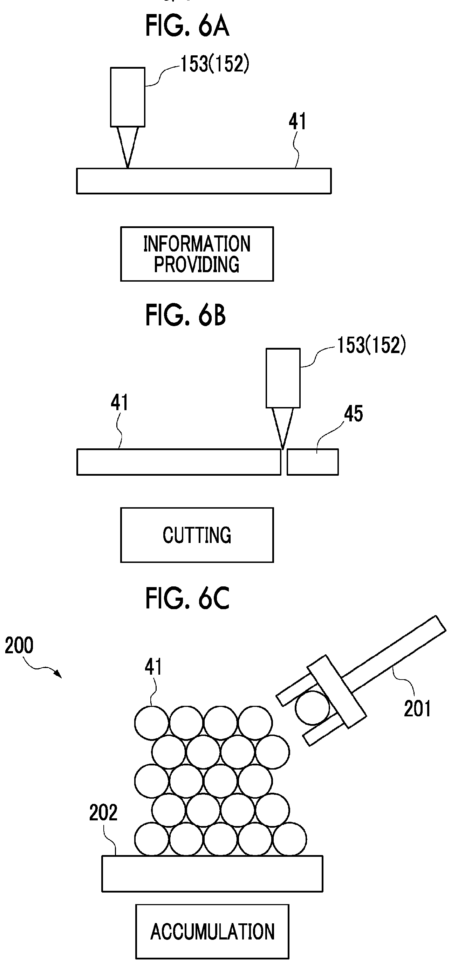

The marking unit 152 provides information by marking the metal pipe 41. The marking unit 152 marks the information on the metal pipe 41 so as to reflect the information acquired by the information acquisition unit 151. The marking unit 152 may perform marking by using, for example, laser machining. Specifically, as shown in Fig. 6A, the marking unit 152 may be configured by a laser device 153. The laser device 153 marks the surface of the metal pipe 41 by irradiating the surface with a laser beam. Additionally, in a case where the marking unit 152 is configured by the laser device 153, the laser device 153 may immediately cut the surplus part 45 after the marking has been formed (refer to Fig. 6B). In this way, a laser cutting device can be diverted as the marking unit 152. In addition, a marking method of the marking unit 152 is not limited to the laser machining, and for example, the marking may be performed by a method such as printing, cutting work, or marking-off. However, it is preferable to use the laser device 153 as the marking unit 152 from the viewpoint of easiness of machining and the fact that it is difficult to erase unlike a printed mark.

As shown in Figs. 5A and 5B, the marking unit 152 marks an information display spot 170 on a flat surface portion of the pipe portion 43 to provide information. In addition, the information display spot 170 is set at a spot on one end side of the pipe portion 43 in the longitudinal direction. However, the information display spot 170 may be set at any spot of the metal pipe 41 as long as the information display spot 170 is readable (however, the surplus part 45 is excluded).

As described above, the information provided to the metal pipe 41 is at least information from which the forming conditions of a formed product are acquirable. As shown in Fig. 5B, the information may be expressed by characters. However, the information may be expressed by a symbol or a combination of characters and symbols.

The information may be represented in such a manner that the forming conditions are directly readable. For example, the marking unit 152 may directly write characters and numbers showing the forming conditions on the metal pipe 41. For example, the marking unit 152 may directly describe "heating temperature : XX°C., primary blowing pressure: YY MPa, secondary blowing pressure: ZZ MPa", or the like, on the metal pipe 41. Alternatively, the marking unit 152 may simply write the forming conditions on the metal pipe 41. For example, the rule that "conditions of heating temperature, primary blowing pressure, secondary blowing pressure, or the like are shown in order from the left" is preset, and the marking unit 152 describes "XX-YY-ZZ" or the like to the metal pipe 41. Accordingly, the determination unit 155 can acquire the forming conditions that "the heating temperature is XX°C, the primary blowing pressure is YY MPa, and the secondary blowing pressure is ZZ MPa" during reading.

Alternatively, the information may be represented in such a manner that a database associated with the forming conditions is capable of being referred to. For example, the marking unit 152 writes identifiable contents such as characters, numbers, QR codes (registered trademarks), barcodes, or symbols on the metal pipe 41. When the determination unit 155 reads the forming conditions, the written contents are compared with the database of the forming conditions, and the forming conditions are derived. Specifically, the information providing device 150 provides a unique number to a certain metal pipe 41, and registers the number and the forming conditions unique to the metal pipe 41 in the database. Accordingly, the determination unit 155 can acquire the forming conditions corresponding to the number by reading the number marked on the metal pipe 41 and referring to the database.

The determination unit 155 determines the forming conditions on the basis of the information provided to the metal pipe 41. In the present embodiment, since the information providing device 150 has the determination unit 155, the information providing device 150 constitutes the determination system 300. The determination system 300 is a system that performs determination on a formed product. The determination unit 155 determines the forming conditions of the metal pipe 41 on the basis of the information provided to the metal pipe 41. Specifically, the determination unit 155 determines the forming conditions by performing the processing as described above.

The accumulation device 200 is a device that accumulates a plurality of the metal pipes 41. As shown in Fig. 6C, the accumulation device 200 may include a robot arm 201 that holds the metal pipe 41. After the marking by the information providing device 150 is completed, the robot arm 201 holds the metal pipe 41 and places the metal pipe 41 on an accumulation bogie 202. The robot arm 201 accumulates the metal pipe 41 by stacking the metal pipe 41 on the accumulation bogie 202 by repeating the operation.

Next, the operation and effects of the information providing device 150 according to the present embodiment will be described.

The information providing device 150 according to the present embodiment is an information providing device 150 that provides information to the metal pipe 41 formed by the forming device 1 having the forming die 2 and provides the information to the metal pipe 41 after being formed by the forming device 1, and the information is information from which at least the forming conditions of the metal pipe 41 are acquirable.

The information providing device 150 provides the information to the metal pipe 41 after being formed by the forming device 1. Therefore, it is possible to avoid a situation in which the information provided to the metal pipe 41 disappears along with the forming. For example, in a case where the metal pipe material 40 is marked and provided information, there is a possibility that the mark is crushed or stretched during the forming, which makes it difficult to read.

Additionally, the information is information from which at least the forming conditions of the metal pipe 41 are acquirable. Therefore, for example, in a case where there is a problem with the metal pipe 41 in a subsequent inspection process, it is possible to specify under what forming conditions the metal pipe 41 is formed. From the above, the traceability of the metal pipe 41 can be improved. Such an effect becomes particularly remarkable in a case where the forming device 1 for performing STAF forming shown in Fig. 2 is used. That is, since the STAF forming requires a complicated machining process as compared to a forming method such as cold pressing, hydroforming, and hot stamping, it is necessary to identify a management item for each formed product. In the cold pressing, the hydroforming, and the hot stamping, it was sufficient to take out the metal pipe 41 from the accumulation bogie 202 again after being accumulated by the accumulation device 200 and mark a lot or the like. On the other hand, in the STAF forming, lot management alone was insufficient. In contrast, the information providing device 150 can manage even detailed forming conditions of an individual metal pipe.

The information may be represented in such a manner that the forming conditions are directly readable. In this case, the forming conditions can be quickly read from the information reflected in the formed product without referring to the forming conditions in the database.

The information may be represented in such a manner that the database associated with the forming conditions is capable of being referred to. In this case, even if the information reflected in the formed product is simple, many forming conditions can be acquired by referring to the database.

The information providing device 150 according to the present embodiment is an information providing device 150 that provides information to the metal pipe 41 formed by the forming device 1 having the forming die 2, and the information providing device 150 provides the information to each metal pipe 41 whenever one metal pipe 41 is formed by the forming device 1.

The information providing device 150 provides the information to each metal pipe 41 whenever one metal pipe 41 is formed by the forming device 1. Therefore, the information providing device 150 can directly provide the information to an individual metal pipe 41. Therefore, for example, in a case where there is a problem with the metal pipe 41 in a subsequent inspection process, the information can be directly acquired from the metal pipe 41. From the above, the traceability of the metal pipe 41 can be improved. As in the above-described comparative example, it is not possible to sufficiently manage the forming conditions of the individual metal pipe 41 in a case where a problem has occurred only by giving lot information after a plurality of the metal pipes 41 are accumulated. In contrast, since the information providing device 150 provides the information to the individual metal pipe 41, sufficient management can be performed.

In addition, for example, the inspection process is executed as follows. That is, after the information is provided to the individual metal pipe 41, the inspection process of inspecting whether the metal pipe 41 satisfies specifications may be executed. Such an inspection process is executed before delivery of the metal pipe 41. In the inspection process, the dimensions, strength, and the like of the formed metal pipe 41 are inspected. Whether the specifications required (for example, in a customer's company or a manufacturer's company) satisfy acceptance criteria are inspected for the inspected dimensions and strength. In a case where the acceptance criteria are not satisfied, it is possible to immediately notify a worker or a manager of the forming device of an alert or the like. In such an inspection process, all the formed metal pipes 41 may be inspected, or a sampled metal pipe 41 may be inspected. Then, the determination system 300 can immediately acquire the forming conditions of the metal pipe 41 that do not satisfy the acceptance criteria.

Additionally, the inspection process may be executed after the delivery of the metal pipe 41. For example, even in a case where it is necessary to check the performance of the metal pipe 41, the information provided by the information providing device 150 is provided to the metal pipe 41. Therefore, the determination system 300 can immediately acquire the forming conditions of the metal pipe 41 and check the performance of the metal pipe 41.

As described above, the determination system 300 can specify the forming conditions of the metal pipe 41 having a problem by determining the forming conditions of the metal pipe 41 on the basis of the information provided to the metal pipe 41. From the above, the traceability of the metal pipe 41 can be improved.

The information providing device 150 may be provided between the forming device 1 and the accumulation device 200 that accumulates a plurality of the metal pipes 41. When a large number of metal pipes 41 are mixedly present in the accumulation device 200, it is difficult to individually provide information on an individual metal pipe 41. Therefore, the information providing device 150 can individually give information to the metal pipe 41 in a stage before being accumulated by the accumulation device 200.

The present invention is not limited to the above-described embodiment.

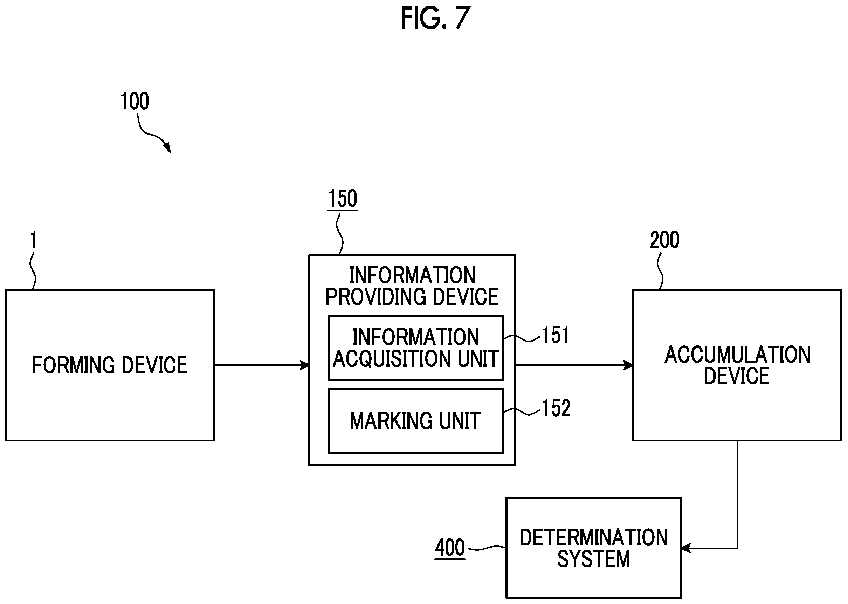

In the above-described embodiment, the information providing device 150 functions as the determination system 300 by including the determination unit 155. Instead of this, as shown in Fig. 7, the determination system 400 may be provided as a dedicated system separate from the information providing device 150.

The shape of the formed product is not particularly limited. Additionally, a forming material may not be the metal pipe material, and may be a metal plate or the like.

In addition, in the above-described embodiment, the die adopted in the forming device for STAF has been described as an example. However, the type of the forming device in which the die according to the present invention is adopted is not particularly limited, and may be forming devices for cold pressing, hydroforming, and hot stamping, other forming devices, or the like.

### Reference Signs List

- 1: forming device
- 2: forming die
- 150: information providing device
- 200: accumulation device (accumulation unit)
- 300, 400: determination system.

## Claims

1. An information providing device that provides information to a formed product formed by a forming device having a die,
wherein the information is provided to the formed product after being formed by the forming device, and the information is information from which at least forming conditions of the formed product are acquirable.

2. The information providing device according to claim 1,
wherein the information is represented in such a manner that the forming conditions are directly readable.

3. The information providing device according to claim 1,
wherein the information is represented in such a manner that a database associated with the forming conditions is capable of being referred to.

4. An information providing device that provides information to a formed product formed by a forming device having a die,
wherein the information providing device provides the information to each formed product whenever one formed product is formed by the forming device.

5. The information providing device according to claim 4, which is provided between the forming device and an accumulation unit that accumulates a plurality of the formed products.

6. A determination system that performs a determination on a formed product formed by a forming device having a die,
wherein forming conditions of the formed product are determined on the basis of information provided to the formed product, and
the information is information from which at least the forming conditions of the formed product are acquirable.
